# EUROPEAN PATENT SPECIFICATION

(11) **EP 0 528 466 B1**
(45) Date of publication and mention of the grant of the patent: **26.04.1995**
(21) Application number: 92202283.5
(22) Date of filing: 24.07.1992
(51) Int. Cl.: A23G 3/30

(54) **Chewing gum with improved flavor release**
Kaugummi mit verbesserter Geschmacksfreigabe
Chewing gum à libération d'arôme améliorée

(30) Priority: 16.08.1991 EP 91202106
(43) Date of publication of application: 24.02.1993
(73) Proprietor: QUEST INTERNATIONAL NEDERLAND BV, 1411 GP Naarden (NL)
(72) Inventor: Burger, Jacobus Johannes, NL-1108 CD Amsterdam (NL); Sloot, Engelbertus Albertus, NL-1222 ST Hilversum (NL); Jansma, Minke Jetske, NL-1411 XT Naarden (NL); Glasius, Martin Eduard, NL-3766 BG Soest (NL); Koolhaas, Willem Engel, NL-1271 CM Huizen (NL)
(74) Representative: Dekker, Enno E.J.

(56) References cited:
- EP-A- 0 085 805
- EP-A- 0 242 135
- EP-A- 0 426 428
- FR-A- 2 179 528
- US-A- 1 711 281

## Description

The invention relates to chewing gum with improved flavour release and to a process for flavouring chewing gum. More particularly the invention relates to chewing gum containing encapsulated flavour.

A well known problem with chewing gum is the strong interaction between most flavour materials and the gum base. Thus, although a substantial quantity of flavour is still present in the chewing gum after the first few minutes of chewing, this flavour is only very incompletely released in the saliva, even after prolonged chewing.

Various ways and means have been tried to solve this problem. Thus, the use of encapsulated flavours, such as spray dried flavours is described in WO-90/13994 and in the extensive literature cited therein. The use of alginate or carrageenan encapsulated flavours is described in EP-A-221850. These attempts are all directed to making a more economical use of the flavour (or sweetener) added to the chewing gum i.e. producing the same or better flavour perception during chewing with less flavour added to the gum. However, none of the known solutions have so far proven satisfactory.

It has now been found that chewing gum containing flavour which is encapsulated in micro-organism cells provides improved flavour release on chewing. Thereby a much stronger flavour impression may be obtained with the same amount of flavour as in conventional chewing gum. Alternatively, a flavour impression of the same strength as with conventional chewing gum may be obtained with less added flavour. Thus a substantial reduction in flavour needed for flavouring chewing gum may be combined with an improvement of the overall flavour impression.

Thus, the invention provides chewing gum comprising encapsulated flavour wherein this flavour is encapsulated in micro-organism cells. The invention also provides a process for producing chewing gum with improved flavour release wherein the flavour is first encapsulated in micro-organism cells whereafter the thus encapsulated flavour is added to the other chewing gum ingredients.

The micro-organism cells used for encapsulating chewing gum flavours may be yeast, fungi, algae or bacterial cells, but should be suitable for human ingestion. Also, the cells should have no objectionable flavour themselves. Preferably micro-organism cells are used which themselves contribute no or only very little flavour to the overall flavour of the chewing gum. Cells of food-grade yeasts such as Saccharomyces cerevisiae have been found to be very suitable.

The invention may be applied to all types of chewing gum, which for the purposes of this invention includes so called bubble gum, and for all kinds of flavours, such as peppermint and spearmint flavours, fruit flavours and spicy flavours. The amount of flavour to be used in the chewing gum depends on the strength of the flavour impression desired. Then, the flavour content of the micro-organism cells determines how much of these cells have to be added to the chewing gum to obtain the desired flavour strength. Flavour-filled micro-organism cells, hereinafter referred to as "flavour capsules", having a flavour content of up to 70% by weight, particularly up to 50% by weight, may be prepared according to procedures known in the art, such as described in EP-A-85805, EP-A-242135 and DE-A-3530562. Usefully such flavour capsules will have a flavour content of at least 1% by weight.

Generally, the overall level of conventional flavour in chewing gum does normally not exceed 2% by weight of the chewing gum and in most cases will be less than 1%. The invention provides the possibility to reduce the amount of flavour to below 75% w/w, in many cases even below 60% of the amount of conventional liquid flavours to obtain the same flavour strength.

The other ingredients of chewing gum according to the invention are conventional in the art and are described in the literature cited above. They comprise a so-called gum base in an amount of between 10 and 35% by weight, generally around 20%, and furthermore sugars, such as saccharose and/or glucose, and/or sugar substitutes such as mannitol, sorbitol and xylitol, making up the bulk of the chewing gum i.e. around 60-80% by weight. Also, chewing gum often contains a small amount of glycerin or comparable component and generally a small amount of water. Fruit-flavoured chewing gum may additionally contain a small amount of a food grade acid to improve its fruity taste. Sweetening of the chewing gum may also be brought about by the use of artificial sweeteners, e.g. those mentioned above and/or those of the dipeptide type, thus producing low sugar or sugar-free chewing gum.

The ways and means for preparing chewing gum are known in the art and described in the literature cited above, in "Gum Bases and Gum Products Technology", published by Cafosa Gum S/A, Barcelona, Spain and in "The Great American Chewing Gum Book", Robert Hendrickson, 1974. The process for preparing the chewing gum according to the invention uses these ways and means. The flavour capsules may be added to the other ingredients of the chewing gum, before or during processing of these ingredients into chewing gum. The flavour capsules are preferably added during processing, more preferably near the end of the processing.

### EXAMPLE 1

3 Batches of peppermint flavoured chewing gum were prepared according to the recipe below:
100.0 g Dorada Plus-T *
100.0 g Glucose, 43° Bé
2.5 g Glycerin
297.5 g Castor sugar
* Chewing gum base marketed by Cafosa Gum S/A, Barcelona, Spain

The first three ingredients were mixed in a kneading machine while heating to 60-70°C and gradually adding the castor sugar. Near the end of the addition, the flavour was added as well and kneaded through the chewing gum mass.
One batch of chewing gum was flavoured with 0.16% w/w of conventional liquid peppermint flavour; the second batch was flavoured with 0.7% w/w of encapsulated peppermint flavour (conventional encapsulation by spray drying, flavour content of the capsules 23.2% w/w); the third batch was flavoured according to the invention with 0.57% w/w of peppermint flavour capsules (encapsulation in Saccharomyces cerevisiae cells, flavour content of the capsules 29% w/w). The peppermint flavour used for encapsulation was the same as the flavour added as such to the first gum.

After shaping the chewing gum into sticks the batches were judged by a panel of six experienced judges who unanimously assessed the second batch as having a stronger and somewhat longer lasting peppermint flavour than the first chewing gum. They assessed the third batch as having by far the strongest taste of all three and about the same lastingness as the second batch.

Further experimentation and assessment showed that for this recipe the quantity of peppermint flavour encapsulated in Saccharomyces cerevisiae cells could be reduced to about one third of the original value to obtain the same initial flavour strength as obtained when using the unencapsulated peppermint flavour.

Favourable results were also obtained when repeating the example with yeast encapsulated spearmint, staranis, lemon and orange flavours to compare the performance of these flavours in this chewing gum base with the performance of the corresponding conventional liquid flavours in the same gum base.

### EXAMPLE 2

2 Batches of peppermint flavoured sugar-free chewing gum were prepared according to the recipe below:

| | |
|---|---|
| Dorada SF Base * | 26.00 g |
| Sorbitol powder | 44.72 g |
| Sorbitol syrup (70% in water) | 17.00 g |
| Mannitol | 7.00 g |
| Glycerine | 4.00 g |
| Saccharine | 0.03 g |
| Sodium saccharine | 0.05 g |

| | |
|---|---|
| * Chewing gum base marketed by Cafosa Gum S/A. | |

The chewing gum batches were processed in the usual way as described in EXAMPLE 1 adding 1.2 g of liquid peppermint flavour to one batch and 1.0 g of peppermint flavour capsules (encapsulated in Saccharomyces cerevisiae cells, flavour content of the capsules: 46 % w/w) to the other batch. Thus the batch flavoured with encapsulated flavour had only 38% of the flavour content of the batch flavoured with conventional liquid flavour.

After shaping the chewing gum into sticks the batches were judged by a panel of six experienced judges who assessed both batches of chewing gum as having about the same initial flavour strength, however the second batch, containing the ecapsulated flavour, showed a longer lasting flavour than the first batch.

## Claims

1. Chewing gum comprising encapsulated flavour wherein the flavour is encapsulated in micro-organism cells.

2. Chewing gum according to claim 1 wherein the micro-organism cells are those of yeast, fungi, algae or bacteria which are suitable for human ingestion.

3. Chewing gum according to claim 2 wherein the micro-organism cells are of food-grade yeast.

4. Chewing gum according to claim 2 or 3 wherein the flavour capsules have a flavour content of between 1 and 70% w/w.

5. Chewing gum according to claim 4 wherein the flavour capsules have a flavour content of up to 50% w/w.

6. Process for producing chewing gum with improved flavour release wherein a flavour encapsulated in micro-organism cells is added to other chewing gum ingredients comprising a gum base and sugars and/or sugar substitutes and the ingredients are processed into chewing gum.

## Patentansprüche

1. Kaugummi, der eingekapselten Aromastoff enthält, worin der Aromastoff in Mikroorganismus-Zellen eingekapselt ist.

2. Kaugummi nach Anspruch 1, worin die Mikroorganismus-Zellen diejenigen von Hefe, Pilzen, Algen oder Bakterien sind, welche zum Verzehr durch den Menschen geeignet sind.

3. Kaugummi nach Anspruch 2, worin die Mikroorganismus-Zellen Zellen von Hefe in Lebensmittelqualität sind.

4. Kaugummi nach Anspruch 2 oder 3, worin die Geschmacksstoffkapseln einen Geschmackstoffgehalt von zwischen 1 und 70% (Gew./Gew.) haben.

5. Kaugummi nach Anspruch 4, worin die Geschmacksstoffkapseln einen Geschmackstoffgehalt von bis zu 50% (Gew./Gew.) haben.

6. Verfahren zu Herstellung von Kaugummi mit verbesserter Aromafreisetzung, worin ein in Mikroorganismus-Zellen eingekapselter Aromastoff weiteren Kaugummizutaten zugesetzt wird, die eine Kaugummigrundlage und Zucker und/oder Zuckerersatzstoffe umfassen, und die Zutaten zu Kaugummi verarbeitet werden.

## Revendications

1. Chewing gum comprenant un arôme capsulé dans lequel l'arôme est capsulé dans des cellules de micro-organismes.

2. Chewing gum selon la revendication 1 dans lequel les cellules de micro-organismes sont constituées par de la levure, des champignons, des algues ou des bactéries qui sont convenables à l'ingestion humaine.

3. Chewing gum selon la revendication 2 dans lequel les cellules de micro-organismes sont de la levure de qualité alimentaire.

4. Chewing gum selon la revendication 2 ou 3 dans lequel les capsules aromatiques ont une teneur en arôme comprise entre 1 % et 70 % poids/poids.

5. Chewing gum selon la revendication 4 dans lequel les capsules aromatiques ont une teneur en arôme jusqu'à 50 % poids/poids.

6. Procédé de production d'un chewing gum à libération d'arôme améliorée dans lequel un arôme capsulé dans des cellules de micro-organismes est ajouté à d'autres ingrédients de chewing gum comprenant une base de gomme et des sucres et/ou des substituts de sucre et les ingrédients sont traités sous forme de chewing gum.
